# EUROPEAN PATENT APPLICATION

(11) **EP 4 035 979 A1**
(43) Date of publication of application: **03.08.2022**
(21) Application number: 21203234.6
(22) Date of filing: 18.10.2021
(51) Int. Cl.: B62J 15/00, B62K 11/06, B62K 19/06, B62M 6/40

(54) **FRAME FOR ELECTRIC BICYCLE AND ELECTRIC BICYCLE COMPRISING SUCH FRAME**

(30) Priority: 02.02.2021 IT 202100002120
(71) Applicant: Ledraisine S.r.l., 38068 Rovereto TN (IT)
(72) Inventor: Fazzi, Luca, 38068 Rovereto TN (IT)
(74) Representative: Perani & Partners S.p.A.

(57) **Abstract**

Frame (1) for electric bicycles, comprising: a tubular structure (2) provided with a front-end portion (3) and a rear-end portion (4) connected together by means of a central portion (5); wherein the central portion (5) comprises a single tubular element (6) extending longitudinally between a front end (7) in which it is connected with the front-end portion (3) and a rear end (8) in which it is connected with the rear-end portion (4); the rear-end portion (4) comprises a pair of C-shaped tubular elements (9) extending between an upper end (10) in which they are connected with the rear end (8) of the central portion (5) and a lower end (11) in which they are connected to each other; the rear-end portion (4) comprises a mudguard element (12) extending in an arc between a first end (13) in which it is connected with the rear end (8) of the central portion (5) and a second end (14) in which it is connected with the pair of C-shaped tubular elements (9) near the lower end (11).

## Description

### FIELD OF APPLICATION

The present invention relates to a frame for pedal-assisted electric bicycles and a pedal-assisted electric bicycle comprising such a frame.

### Description of the technical background

It is known in the art to make a frame for pedal-assisted bicycles made of conventional materials, such as steel or aluminium. The known frames comprise a tubular structure provided with a front-end adapted to support the front wheel, a rear-end adapted to support the rear wheel, and an intermediate connecting portion between the front-end and the rear-end. The intermediate connecting portion consists of two tubular elements angled together to connect the front-end with the rear-end.

### Problems of the background art

In the prior art, the frame is quite rigid and heavy. Furthermore, the known frames have a size and weight such as to make the bicycle unwieldy and, in addition, lead to a reduced battery life.

### SUMMARY OF THE INVENTION

The object of the invention in question is to obtain a frame for pedal-assisted bicycles able to overcome the drawbacks of the prior art.

### Advantages of the invention

By virtue of an embodiment, it is possible to obtain a frame for pedal-assisted bicycles able to provide greater flexibility to the bicycle.

By virtue of an embodiment, it is possible to make a frame for pedal-assisted bicycles able to make the bicycle lighter and more manageable.

By virtue of an embodiment, it is possible to make a frame for pedal-assisted bicycles with high mechanical properties, durability and resistance.

### BRIEF DESCRIPTION OF THE DRA WINGS

The features and advantages of the present invention will become apparent from the following detailed description of a possible practical embodiment thereof, illustrated by way of non-limiting example in the accompanying drawings, in which:

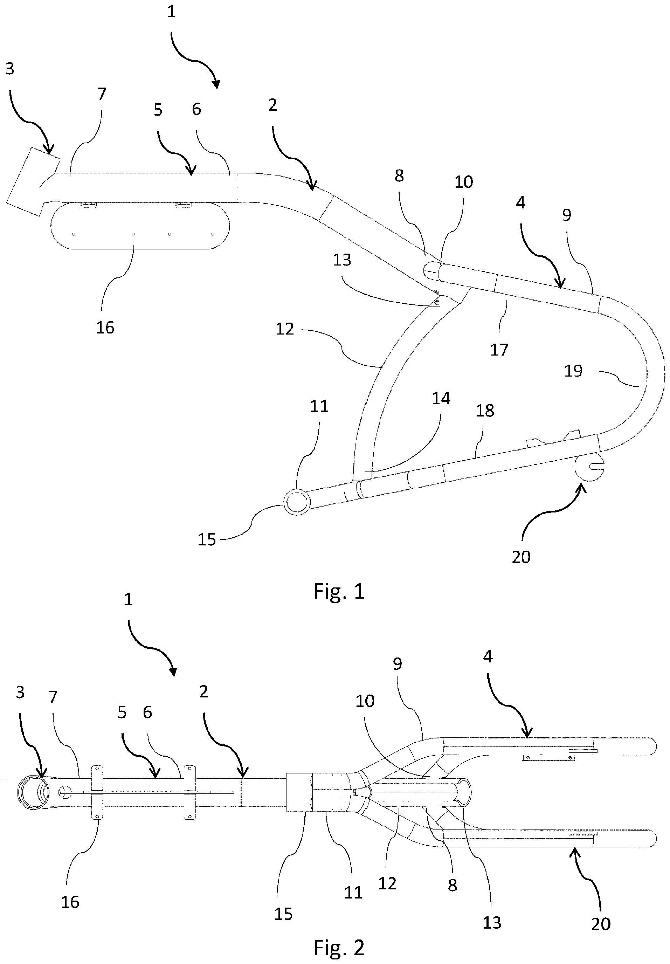

- figure 1 shows a side view of a frame for pedal-assisted bicycles of the present invention,
- figure 2 shows a bottom view of the frame of figure 1.

The frame illustrated in the accompanying drawings is to be understood as schematically depicted, not necessarily to scale and not necessarily with the proportions depicted between the various constituent elements.

### DETAILED DESCRIPTION

The present invention relates to a frame 1 for electric bicycles, and in particular for pedal-assisted electric bicycles.

The frame 1 comprises a tubular structure 2 provided with a front-end portion 3 and a rear-end portion 4 connected together by means of a central portion 5.

Preferably, the tubular structure 2 has a hollow circular section with a thickness of 2mm which ensures a greater resistance to bending loads, in addition to a greater penetrability in the welding operation which ensures the structural stability thereof.

In accordance with the preferred solution of the invention, the tubular structure 2 is made of high-strength microalloyed steel, preferably, S420MC steel. Advantageously, the tubular structure 2 is very rigid, since the frame must ensure the right balance between stability and manoeuvrability of the bicycle as a function of the use of an electric motor. S420MC steel is characterised by a fine-grained microstructure with a high degree of chemical purity and a low sulphur and carbon content. Preferably, such a material is subjected to a thermomechanical lamination or normalization process. Advantageously, such a material has a high ductility, ensuring a high yield strength and mechanical strength. Therefore, it is possible to adopt lower bending radii in cold machining. Furthermore, such steel, while ensuring the frame 1 a low weight, has a high mechanical resistance to fatigue. In addition, the low percentage of carbon and a discrete titanium percentage of the steel used give the frame 1 high capacity in a bicycle to cushion the roughness of any type and condition of terrain. The exceptional yield strength and toughness of the high-strength S420MC steel tubular elements allow, for the same performance, the use of considerably lower thicknesses than those of the known steel tubes. Therefore, the use of these special steels translates into lower weight, increased capacity, savings in handling and longer life for the frame 1.

It should be noted that the various elements of the tubular structure 2 are connected to each other by means of welding.

The front-end portion 3 is adapted to be structurally and operatively couplable with the front structure of the bicycle, i.e., at least with the assembly of the handlebar, stem, fork and front wheel. Furthermore, the rear-end portion 4 is adapted to be structurally and operatively couplable with the rear structure of the bicycle, i.e., at least with the assembly of the rear wheel, electric motor, pedals, chain and related mechanisms. Of course, the frame 1 is adapted to house and support other known bicycle components, such as brakes, lights and saddle.

The central portion 5 comprises a single tubular element 6 extending longitudinally between a front end 7 in which it is connected with the front-end portion 3 and a rear end 8 in which it is connected with the rear-end portion 4. It should be noted that the front end is placed farther away from the rear end 8 with respect to the support plane when the frame is installed in a bicycle. Preferably, the single tubular element 6 has two substantially straight segments, arranged with each other so as to be angled, as shown in the accompanying drawings. Alternatively, the single tubular element 6 has a totally straight or curved profile (not shown in the accompanying drawings).

The rear-end portion 4 comprises a pair of C-shaped tubular elements 9 extending between an upper end 10 in which they are connected with the rear end 8 of the central portion 5 and a lower end 11 in which they are connected to each other.

The rear-end portion 4 comprises a mudguard element 12 extending in an arc at least between a first end 13 in which it is connected with the rear end 8 of the central portion 5 and a second end 14 in which it is connected with the pair of C-shaped tubular elements 9 near the lower end 11. Preferably, the rear-end portion 4 comprises an additional mudguard element, not shown in the accompanying drawings, constrained to the first end 13 of the mudguard element 12 to partially surround the rear wheel as the frame 1 is assembled in a bicycle.

In accordance with a preferred embodiment of the invention, the rear-end portion 4 comprises a motor-frame seat 15 adapted to house an electric motor and placed at the lower end 11. Preferably, the frame 1 comprises an electric motor (not shown in the accompanying drawings) housed in the motor-frame seat 15. The frame 1 further comprises a pair of pedals (not shown in the accompanying drawings) operatively coupled to the electric motor. More preferably, the frame further comprises members such as chain and related mechanisms for driving a rear wheel (not shown in the accompanying drawings). As is known, the frame 1 is a load-bearing structure, i.e., it has the task of positioning all the various members of the bicycle. In the present invention, the motor partly replaces the classic frame, seeing itself to positioning and supporting the other members, and therefore in this case it is defined as a load-bearing motor or motor-frame. The motor connects the front-end portion 3 with that of the rear-end portion 4 by means of the small rear frame formed by the pair of C-shaped tubular elements 9 and by the tubular structure of the mudguard element 12. The concentration of forces at the centre of the bicycle where the greatest efforts converge, when the frame 1 is installed, allows to have a flexible, manageable frame able to support even more powerful motors without changing the frame structure.

In accordance with a preferred embodiment, the central portion 5 comprises a battery pack seat 16 connected with the single tubular element 6. Preferably, the frame 1 comprises a battery (not shown in the accompanying drawings) housed in the battery pack seat 16. It should be noted that the frame further comprises electrical wiring to connect the electric motor to the battery, preferably housed inside the tubular structure 2.

In accordance with a preferred embodiment, the central portion 5 comprises a saddle holder stem (not shown in the accompanying drawings) connected with the single tubular element 6 near the rear end 8.

Preferably, the pair of C-shaped tubular elements 9 comprises respective upper 17 and lower 18 longitudinal branches connected together by means of a curved central portion 19, as shown in the accompanying drawings. The rear-end portion 4 comprises a pair of rear wheel holder hooks 20 connected at a central area of respective lower longitudinal branches 18 of the pair of C-shaped tubular elements 9.

The present invention further relates to pedal-assisted bicycles (not shown in the accompanying drawings) comprising the frame 1 for electric bicycles according to the present invention.

Preferably, the bicycle comprises a front wheel mounted by means of the stem, handlebar and fork assembly on the front-end portion 3, and a rear wheel mounted on the rear wheel holder hooks 20 of the rear-end portion 4.

Always preferably, the bicycle comprises a saddle mounted on the saddle stem.

Still preferably, the bicycle comprises brakes and related mechanisms installed on the frame 1.

## Claims

1. Frame (1) for electric bicycles, comprising:
- a tubular structure (2) provided with a front-end portion (3) and a rear-end portion (4) connected together by means of a central portion (5);
**characterized in that**
- the central portion (5) comprises a single tubular element (6) extending longitudinally between a front end (7) in which it is connected with the front-end portion (3) and a rear end (8) in which it is connected with the rear-end portion (4);
- the rear-end portion (4) comprises a pair of C-shaped tubular elements (9) extending between an upper end (10) in which they are connected with the rear end (8) of the central portion (5) and a lower end (11) in which they are connected to each other;
- the rear-end portion (4) comprises a mudguard element (12) extending in an arc between a first end (13) in which it is connected with the rear end (8) of the central portion (5) and a second end (14) in which it is connected with the pair of C-shaped tubular elements (9) near the lower end (11).

2. Frame (1) for electric bicycles according to claim 1, wherein:
- the rear-end portion (4) comprises a motor-frame seat (15) adapted to house an electric motor and placed at the lower end (11).

3. Frame (1) for electric bicycles according to claim 2, comprising:
- an electric motor housed in the motor-frame seat (15);
- a pair of pedals operatively coupled to the electric motor.

4. Frame (1) for electric bicycles according to any one of the preceding claims, wherein
- the tubular structure (2) is made of high-strength microalloyed steel.

5. Frame (1) for electric bicycles according to claim 4, wherein:
- the tubular structure (2) is made of S420MC steel.

6. Frame (1) for electric bicycles according to any one of the preceding claims, wherein
- the central portion (5) comprises a battery pack seat (16) connected with the single tubular element (6).

7. Frame (1) for electric bicycles according to claim 6, comprising:
- a battery housed in the battery pack seat (16).

8. Frame (1) for electric bicycles according to any one of the preceding claims, wherein
- the central portion (5) comprises a saddle holder stem connected with the single tubular element (6) near the rear end (8).

9. Frame (1) for electric bicycles according to any one of the preceding claims, wherein
- the pair of C-shaped tubular elements (9) comprises respective upper (17) and lower (18) longitudinal branches connected together by means of a curved central portion (19),
- the rear-end portion (4) comprises a pair of rear wheel holder hooks (20) connected at a central area of respective lower longitudinal branches (18) of the pair of C- shaped tubular elements (9).

10. Pedal-assisted bicycle comprising a frame (1) for electric bicycles according to any one of the preceding claims 1 to 9.
